# EUROPEAN PATENT APPLICATION

(11) **EP 4 015 845 A1**
(43) Date of publication of application: **22.06.2022**
(21) Application number: 21213266.6
(22) Date of filing: 08.12.2021
(51) Int. Cl.: F16B 21/08

(54) **A FASTENER ASSEMBLY**

(30) Priority: 15.12.2020 EP 20383094
(71) Applicant: Illinois Tool Works, Inc., Glenview, Illinois 60025 (US)
(72) Inventor: ARTETA UNANUA, Javier, Glenview, 60025 (US); MARQUEZ COSTA, Jose Lluis, Glenview, 60025 (US)
(74) Representative: HGF

(57) **Abstract**

The present invention provides for a fastener assembly for fastening a component to a support structure, comprising: a male member, comprising a substantially planar head portion at a proximal end having a top and a bottom head surface normal to a first central axis, at least a first and second parallelly arranged and resiliently deformable longitudinal anchor member, each one extending away from said bottom head surface in a direction parallel to and rotationally symmetrical about said first central axis ,said first and said second anchor member terminating in a respective first and second locking portion; a female member, comprising a substantially planar base portion arranged normal to a second central plane extending along a second central axis, having a first coupling bracket and a second coupling bracket, arranged reflective-symmetrical to said first coupling bracket with respect to said second central plane, said first and said second coupling bracket forming at least one central aperture extending along a longitudinal axis parallel to said second central plane, said at least one central aperture being adapted to retainingly receive and lockingly engage with said first and second locking portion of respective said first and said second anchor member when moved into said central aperture along an insertion direction that is coaxial with said first and second central axis, during use; and wherein at least a portion of each one of said first and said second anchor member is adapted to elastically flex into a direction opposite to a respective other one of said first and second anchor member when engaging with respective said first and said second coupling bracket during insertion into said at least one central aperture along said insertion direction.

## Description

The present invention relates to a fastener assembly, in particular, but not exclusively, to a fastener assembly for fastening a component to a support structure.

### Background

Fastening of components to support structures is generally known. For example, in the automotive sector, motor vehicles have doors which include a trim support and an interior door trim facing the interior of the vehicle, which fastens to the trim support using fasteners or so called push-in rivets. Generally, a plurality of fasteners are provided to attach a component to the support structure.

Typically, the component is assembled to the support structure in a direction perpendicular to the plane of the support structure. Since the installation process is carried out manually, the push-in force during installation should be sufficiently low to allow the installer to easily but firmly push in the fastener. At the same time, the locking connection provided by the fastener, i.e. to attach the component to the support material, must provide a retention strength sufficient so that the component remains attached to the support structure. An adequate retention strength is essential as fasteners may be subject to significant loading, especially when the component and support structure are moved relative to one another.

Furthermore, often fasteners are required that facilitate the assembly and disassembly of the coupled component and support structure, for example, to carry out maintenance and repair works. Many of the existing fasteners may be inserted and then removed from the support structure, thus, the parts of the fastener in contact with the support structure are subject to wear, which in turn may reduce the retention strength of the fastener over time. As such, typical currently available fasteners do not facilitate multiple assembly and disassembly without causing irreversible damage to the fastener.

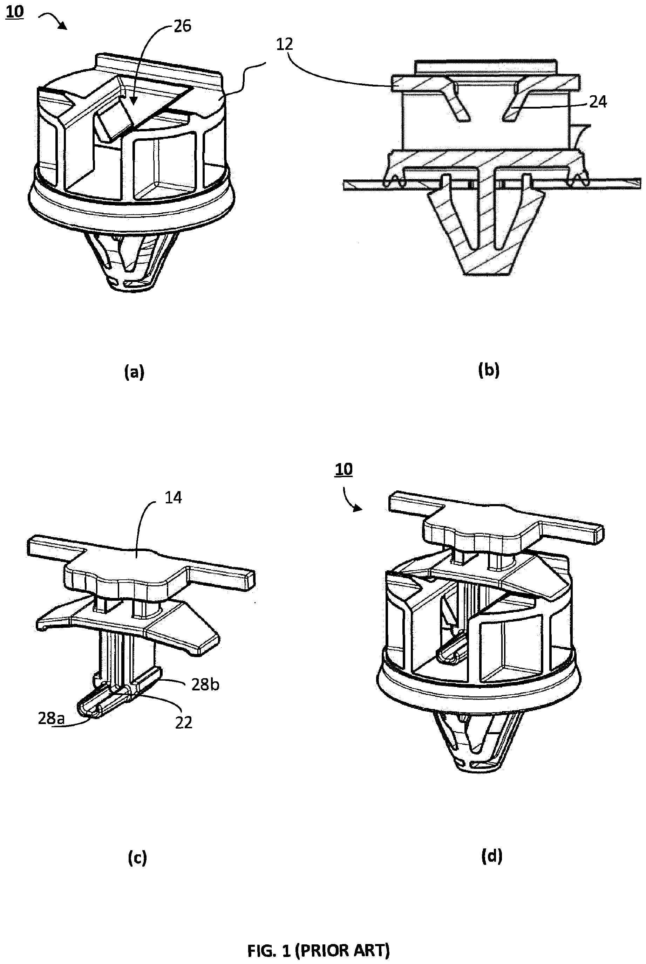

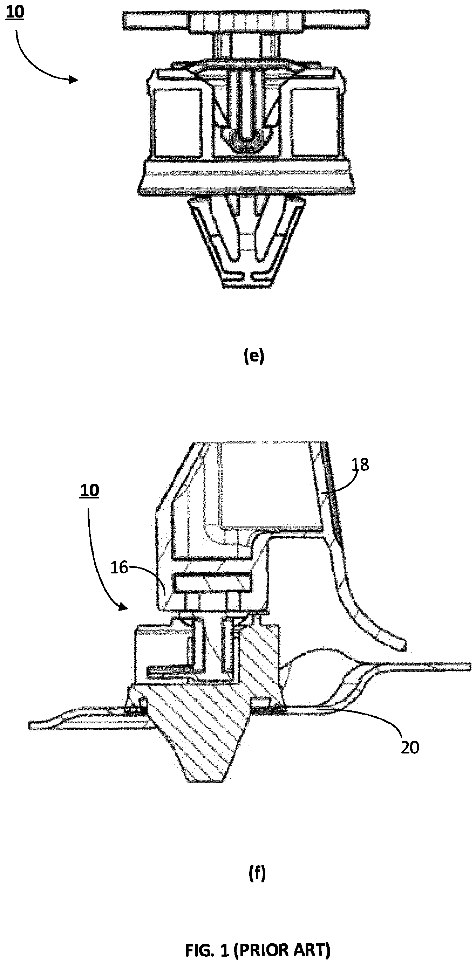

Figure 1, for example, illustrates an example embodiment of a known push-in fastener 10 (a) a perspective view and (b) a cross sectional side view of the female member 12, (c) a perspective view of the male member 14 and (d) a perspective view of the assembled male and female member. As shown in Figures 1(e) and (f), the fastener 10 may be installed with a coupling bracket 16 to fix a trim 18 to a panel 20. This particular fastener 10 comprises a symmetrical and central anchor portion 22 hammer shaped with opposing perpendicular arms 28 configured to engage with resilient teeth or tines 24 provided in the aperture 26 of the female member 12.

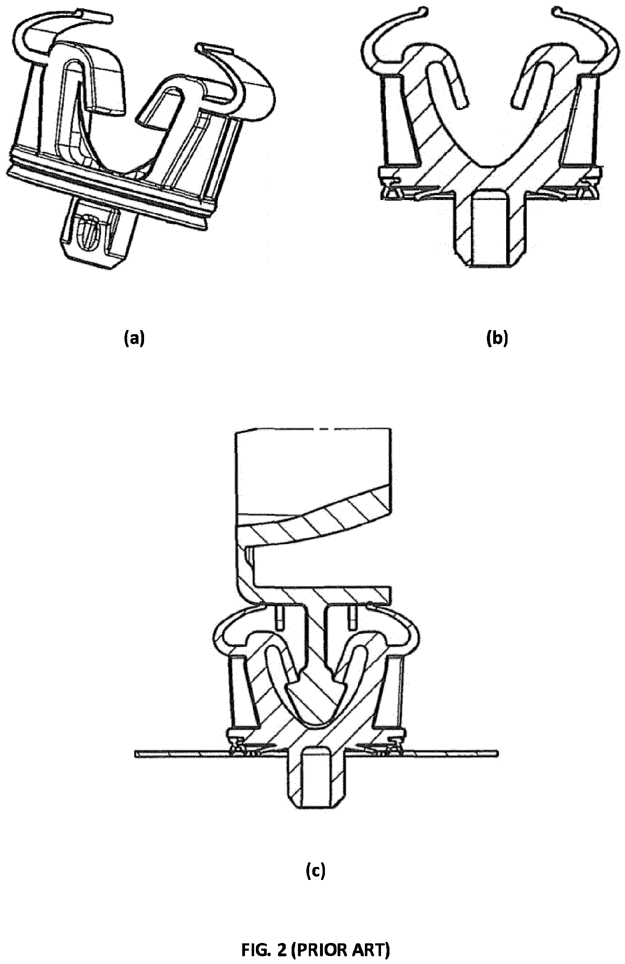

Figures 2(a)-(c) show another example embodiment of a known fastener assembly having a female member with resilient teeth for locking engagement with a male member. Figure 2 shows the female member in (a) a perspective view and (b) a cross-sectional side view, and (c) female and male member lockingly engaged and coupled to respective components and vehicle structure.

However, it is clear that these known push-fit fasteners are not able to provide a strong connection between the male and the female member, as an excessive force may simply bend the teeth out of engagement with the male member.

The present invention aims to mitigate at least one of the aforementioned problems. It is an object of the present invention to provide a fastener assembly with an improved retention strength. Furthermore, it is an object of the present invention to provide a fastener assembly with an improved ease of use during assembly and disassembly of a component with a support structure.

### Summary of the Invention

In accordance with the present invention there is provided a fastener assembly according to the appended claims.

According to an aspect of the present invention, there is provided a fastener assembly for fastening a component to a support structure, comprising:
a male member, comprising a substantially planar head portion at a proximal end having a top and a bottom head surface normal to a first central axis, at least a first and second parallelly arranged and resiliently deformable longitudinal anchor member, each one extending away from said bottom head surface in a direction parallel to and rotationally symmetrical about said first central axis ,said first and said second anchor member terminating in a respective first and second locking portion;
a female member, comprising a substantially planar base portion arranged normal to a second central plane extending along a second central axis, having a first coupling bracket and a second coupling bracket, arranged reflective-symmetrical to said first coupling bracket with respect to said second central plane, said first and said second coupling bracket forming at least one central aperture extending along a longitudinal axis parallel to said second central plane, said at least one central aperture being adapted to retainingly receive and lockingly engage with said first and second locking portion of respective said first and said second anchor member when moved into said central aperture along an insertion direction that is coaxial with said first and second central axis, during use;
wherein at least a portion of each one of said first and said second anchor member is adapted to elastically flex into a direction opposite to a respective other one of said first and second anchor member when engaging with respective said first and said second coupling bracket during insertion into said at least one central aperture along said insertion direction.

Thus, the locking portion of the male member and the at least one central aperture of the female member are couplingly engaged with one another so as to retain the male member within the female member. The engagement of the male member and the female member is enabled via two different mounting directions, i.e. in a first direction that is perpendicular to a central axis and in a second direction that is parallel to the central axis. When the engagement of the central aperture with the locking portion is along the first direction (i.e. sliding into the longitudinal aperture from the side), the female member retains the male member in a releasable manner. Therefore, the male member can be removably coupled with the female member in the first direction (e.g. Y-axis). However, when moved along the second direction (parallel to the central axis) the male member irremovably coupled with the female member (e.g. along Z-axis). This arrangement is particularly advantageous, because the fastener assembly can be designed so as to have a high axial retention strength (i.e. along the second direction or Z-axis).

Advantageously, said first central axis defines a first central plane parallel to said second central plane, during assembly, and wherein each one of said first and said second anchor member is arranged axially offset from said first central plane in a direction opposite to one another.

Advantageously, each one of said first and said second locking portion comprise a first locking arm, projecting in a direction normal to and away from said second central plane, and a second locking arm, projecting in a direction towards said second central plane and said proximal end.

Advantageously, said at least one central aperture further comprises a first central aperture and a second central aperture, said second central aperture being axially spaced apart from said first central aperture in a direction along said second central axis.

Advantageously, each one of said first and second coupling bracket comprises a shoulder portion between said first central aperture and said second central aperture, said shoulder portion projecting towards said second central plane.

Preferably, said first central aperture is adapted to retainingly receive and lockingly engage with said first locking arm of respective said first and second locking portion, and said second central aperture is adapted to retainingly receive and locking engage with said second locking arm of respective said first and second locking portion.

Advantageously, said female member further comprises a fastening element, extending away from a bottom surface of said planar base portion along said second central axis, adapted to lockingly engage with the support structure.

Advantageously, a top surface of each one of said first and second coupling bracket comprises at least one elastically deformable wing member configured to resiliently bias against said bottom head surface of said head portion, during assembly. Preferably, each one of said at least one wing member of said first and second coupling bracket projects in a direction away from said second central plane.

Advantageously, said female member comprises a substantially planar wall portion, arranged substantially normal to said base portion and said second central plane, configured to stoppingly engage with said first and second anchor member when moved within said central aperture in a direction along said longitudinal axis.

### Brief Description of the Drawings

Embodiments of the invention are now described, by way of example only, hereinafter with reference to the accompanying drawings, in which:
**Figure 1** (Prior Art) (a) - (f) illustrates different views of a known push-in fastener having a male engagement member configured to lockingly engage with two opposing resilient teeth provided within an aperture of the female member;
**Figure 2** (Prior Art) illustrates different views of another example of a known push-in fastener having a male engagement member configured to lockingly engage with a female member;
**Figure 3** illustrates a perspective view of (a) a male member, (b) a female member and (c) a skirt member of an example embodiment of the fastener assembly of the present invention;
**Figure 4** illustrates a perspective view of the assembled fastener assembly of the present invention (a) in a perspective front view and (b) in a perspective rear view, ready to be coupled to a structure;
**Figure 5** illustrates perspective close-up views of (a) the locking portion of the anchor members of the male member and (b) the central aperture formed by opposing coupling brackets of the female member;
**Figure 6** illustrates a partial side-view of the assembled male and female member of the fastener assembly of the present invention;
**Figure 7** illustrates a perspective view of (a) a fastener coupling / part configured to engage with the head portion of the male member, and (b) a vehicle structure having an aperture configured to couplingly engage with an anchor part of the female member;
**Figure 8** illustrates an exploded view of the fastener assembly including male member, female member and skirt member, as well as, a vehicle structure and fastener coupling;

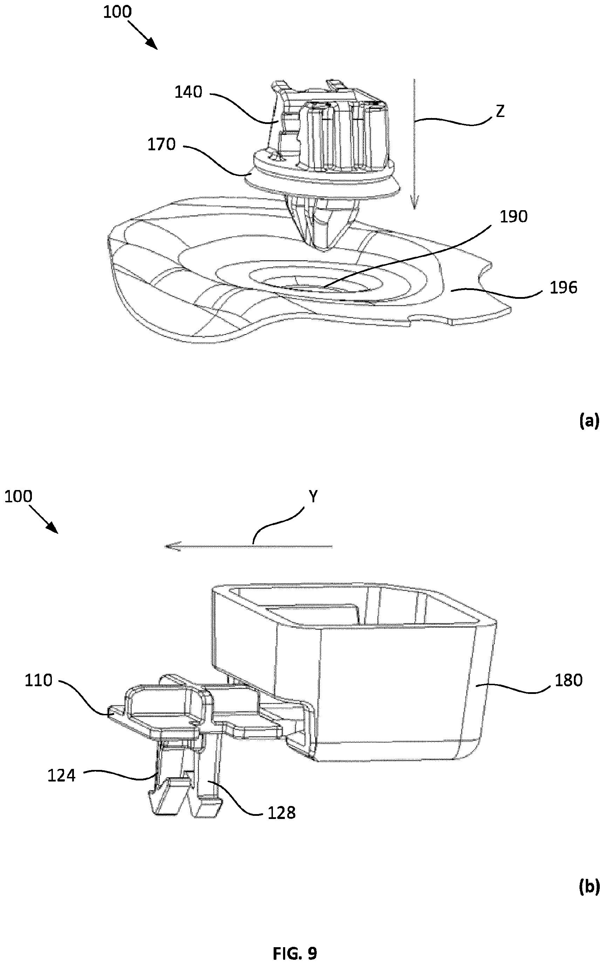

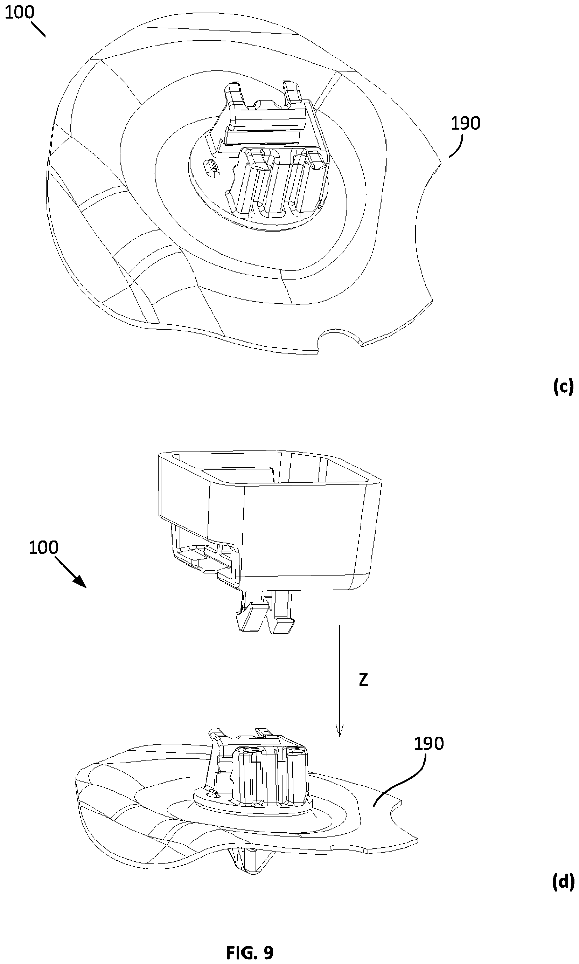

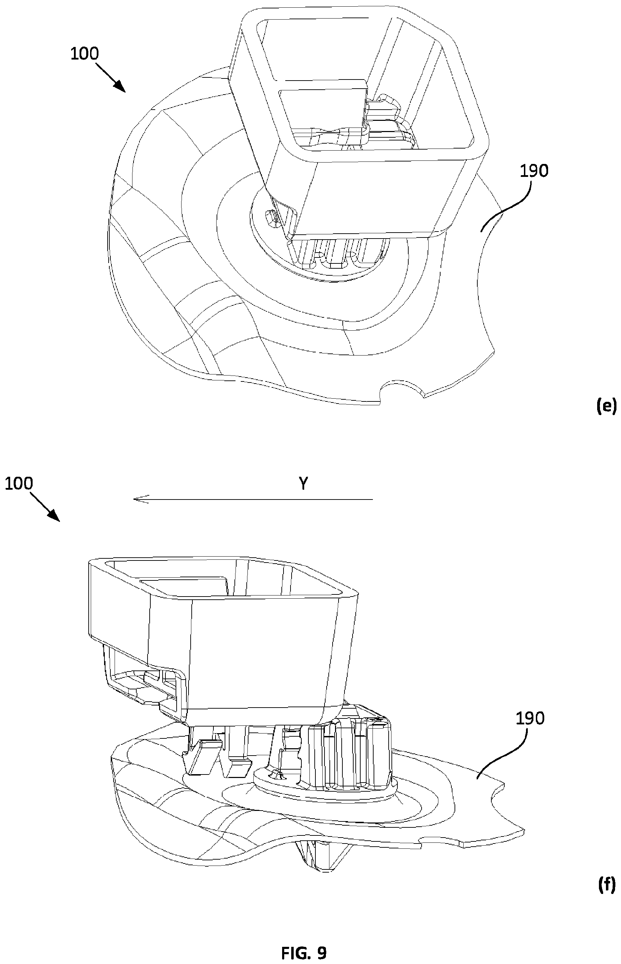

**Figure 9** illustrates a sequence of assembly of the fastener assembly of the present invention with (a) skirt member is couple to female member ready to be coupled to the vehicle structure, (b) head portion of male member is coupled to a fastener coupling of a component (slidably), (c) female member and skirt member is coupled to vehicle structure, (d) male member and attached fastener coupling is moved into engagement with aperture of female member from the top, (e) male and female member are lockingly engaged, and (f) male member and component (via fastener coupling) is slidable moved out of engagement with the female member (along aperture), and
**Figure 10** illustrates different perspective view of the assembled fastener assembly (a) without the fastener coupling and (b) with the fastener coupling.

### Detailed Description

The described example embodiment relates to a fastener assembly, and particularly to a fastener assembly for fastening a component to a support structure. However, the invention is not necessarily restricted to a fastener assembly for fastening a component to a support structure but may also be used to fastener any structure or component to another structure or component, such as a functional component to the bodywork of a vehicle.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

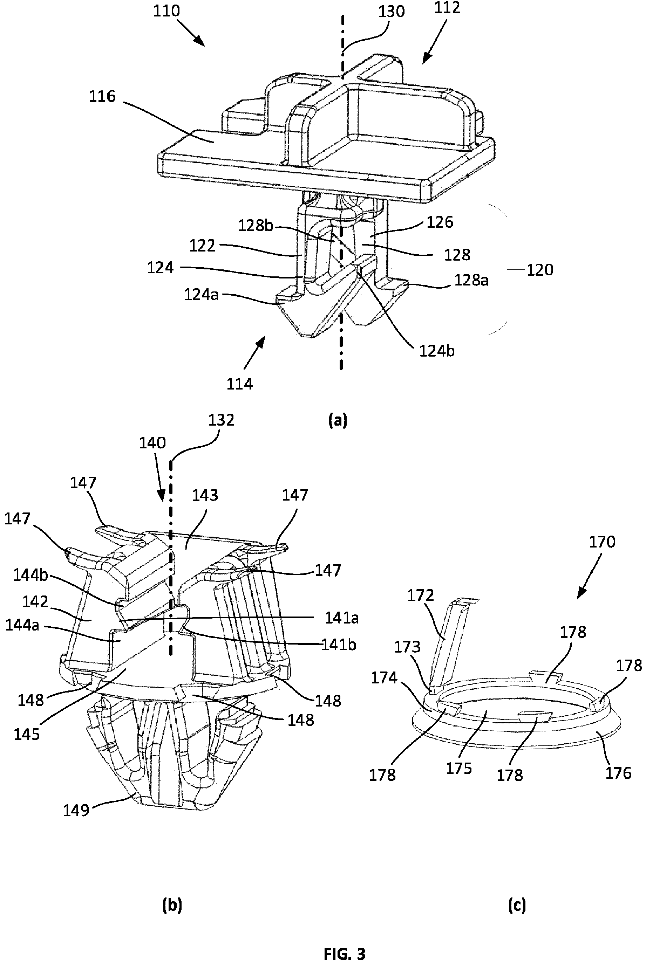

Referring now to Figure 3, the separate components or members of an example embodiment of the fastener assembly 100 of the present invention are shown. In particular, Figure 3(a) illustrates the clip 110 or male member, Figure 3(b) illustrates the clip retainer 140 or female member, and Figure 3(c) illustrates the skirt member 170 of the fastener assembly 100. The clip 110 has a proximal end 112 and a distal end 114. At the proximal end 112, the clip 110 includes a head portion 116 which, in this example embodiment, is provided in the form of a flange. The flange 116 has an upper surface facing the proximal end 112, and a lower surface facing the distal end 114. Protruding from the lower surface of the flange 116 is an attachment member 120 or anchor member, extending away from the flange 116 in a direction generally along a central axis 130. The central axis 130 extends between the proximal end 112 and the distal end 114 of the clip 110.

In this particular example embodiment, the attachment member 120 includes two parallelly arranged legs 122,126. However, it is understood that in other embodiments the attachment member 120 may only have one single leg, or may be provided with any other suitable number of legs. The legs 122,126 are centrally positioned and spaced apart from one another along the bottom surface of the flange 116. The legs are positioned radially opposite to one another in an inverse symmetrical arrangement with respect to the central axis 130. Each leg 122,126 terminates at a distal end where respective hook members (i.e. locking portions) 124 and 128 are provided. Each one of the hook members 124, 128 comprises a respective first 124a, 128a and second 124b, 128b hook portion. For a better visualisation, a centre plane (normal to the surface of the head portion or flange 116, not shown) may intersect with the centre axis 130 dividing the male member or clip 110 in two halves. The two parallel legs 122, 126 are attached to the bottom surface of the flange 116 along the centre plane. However, a first leg 122 and hook member 124 is offset from the centre plane towards a side portion of one half of the clip 110, and a second leg 126 and respective hook member 128 is offset from the centre plane towards side portion of the other half of the clip 110 (opposite the first leg 122). A first hook portion 124a of the first leg 122 projects from the distal end of the first leg 122 in a direction away and perpendicular or normal to the centre plane, wherein a second hook portion 124b projects from the distal end portion of the first leg 122 in a direction towards the centre plane and towards the head portion 116 (at an angle between 0 and 90 degrees relative to the bottom surface of the flange 116). A third hook portion 128a of the second leg 126 projects from the distal end of the second leg 126 in a direction away and perpendicular or normal to the centre plane (and opposite to the first hook portion 124a of the first leg 122), wherein a fourth hook portion 128b projects from the distal end portion of the second leg 126 in a direction towards the centre plane (and opposite the second hook portion 124b of the first leg 122) and towards the head portion 116 (at an angle between 0 and 90 degrees relative to the bottom surface of the flange 116).

In this particular example, the distal end of the first hook portion 124a and the distal end (tip) of the second hook portion 124b are spaced apart in the axial direction along the central axis 130 such that the first hook portion 124a is closer to the distal end 114 and the second hook portion 124b is closer to the proximal end 112. The distal end (or tip) of the third hook portion 128a and the distal end (or tip) of the fourth hook portion 128b are spaced apart in the axial direction along the central axis 130 such that the third hook portion 128a is closer to the distal end 114 and the fourth hook portion 128b is closer to the proximal end 112. In this example embodiment, the first leg 122 and the second leg 126 made of a resiliently elastic material.

Referring now to Figure 3(b), the clip retainer 140 or female member comprises a bracket 142 having two opposing bracket members, a first bracket member 142a and a second bracket member 142b forming a recess 144 divided into a first recess 144a and a second recess 144b, spaced apart from the first recess 144a along a centre axis 132 of the female member or clip retainer 140, by respective shoulder portions 141a, 141b. A base 145 is provided at the bottom of the bracket 142. The first and "stacked" second recess 144a, 144b are open or accessible from a front and top side. A wall 143 is provided at a back side (opposite the front side of the "stacked" recesses 144a, 144b) such that the recesses 144a and 144b are not accessible from the back. An anchor part 149 projects from a bottom surface of the base 145 of the clip retainer 140 in a direction away from the bracket 142. At respective top corners of the bracket 142, elastic wing portions 147 are provided each one extending laterally away and upward from the bracket 142. The wing portions 147 are configured to provide a resilient bias onto the flange when the male member 110 is lockingly engaged with the female member 140. Each one of he shoulder portions 141a, 141b provided on respective inner surfaces of the bracket members 142a, 142b has a lower surface, adapted to lockingly engage with the first and third hook portion 124a, 128a, and an inclined upper surface, adapted to lockingly engage with the second and fourth hook portion 124b, 128b. The incline angle of the upper surface of the shoulder portions 141a, 141b is complementary to the angle of the second and fourth hook portion 124b, 128b. A number of slots 148 are circumferentially spaced apart along the peripheral edge of the base 145. The slots 148 are attachment slots for a sealing skirt 170.

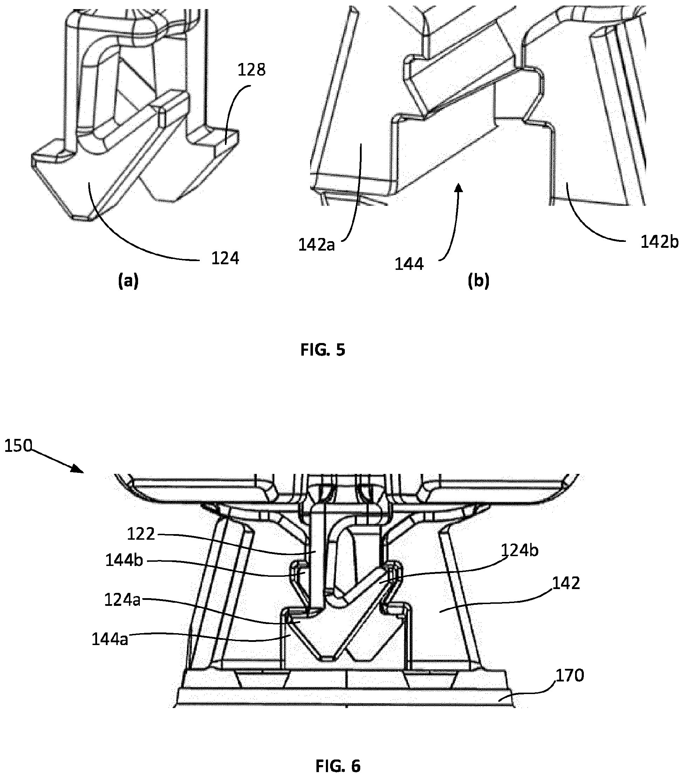

A close-up of the first and second leg 122, 126, as well as, first and second bracket members 142a, 142b and enclosed recess 144 is shown in Figures 5 (a), (b).

Referring now to Figure 3(c), the sealing skirt 170includes a rim 174 extending continuously around to form a circular shape surrounding a through-hole 175. Extending upward from the rim 174 is a mounting member or arm 172, held together by a weld 173. A rim collar 176 extends downwardly away from the rim 174. Four protrusions 178 extend along the top surface of the rim 174 and are configured to slidingly retainingly engage with respective slots 148.

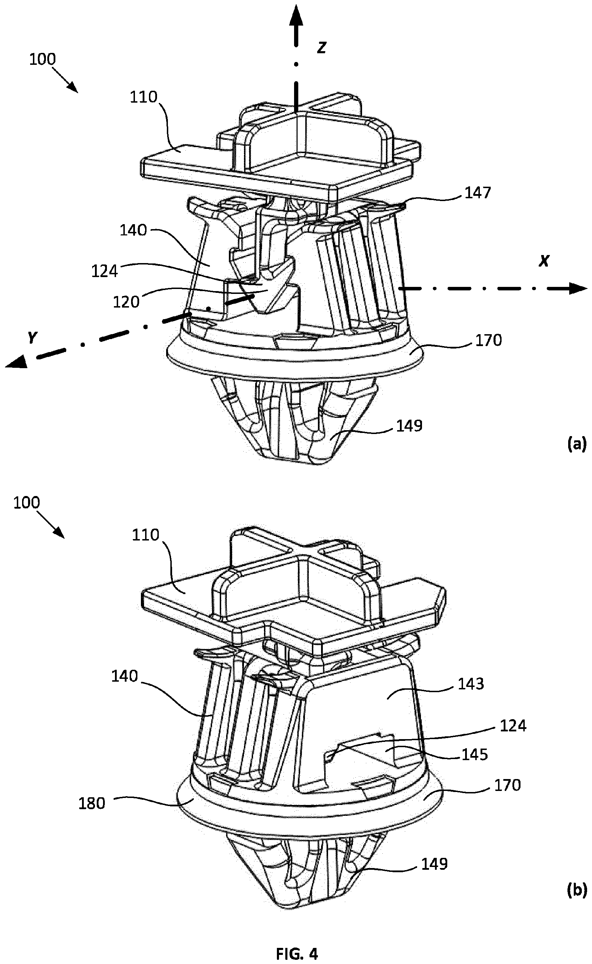

Figure 4 shows the fastener assembly 100 including the clip 110, the clip retainer 140 and the sealing skirt 170. In order to fix the sealing skirt 170 to the retaining clip 140, the anchor part 149 of the clip retainer 140 is inserted through the through-hole 175 of the sealing skirt 170. The protrusions 178 of the sealing skirt 170 are received in the slots 148 of the clip retainer 140. The mounting arm 172 of the sealing skirt 170 couples onto the bracket 142 to fixate the sealing skirt 170 into place. Further, Figure 4(a) illustrates the mutually orthogonal coordinate axes ***X*, *Y* and *Z***. Here, the ***Z***-axis is coaxial or parallel to the central axis 130 of the clip 110 and the central axis 132 of the clip retainer (when assembled). The ***Y***-axis is perpendicular to central axis 130 and in line with the longitudinal axis of the aperture or recess 144. The X-axis is perpendicular to both the ***Y***-axis and the ***Z***-axis.

As shown in Figures 4(a) and (b), as well as, in the partial front view shown in Figure 6, each one of the hook members 124 and 128 is inserted into the recess 144 with the hook portions 124a, 124b, 128a, 128b lockingly engages with respective upper or lower surface of the shoulder portions 141a, 141b. The wall 143 closes the access to the recess 144 from the back. Figure 6 further illustrates the contact engagement between the elastic wing portions 147 and the bottom surface of the flange 116, wherein the wing portions 147 provide an elastic bias between the male member or clip 110 and the female member or clip retainer 140 (i.e. pushing the engaged male member 110 and female member 140 away from each other).

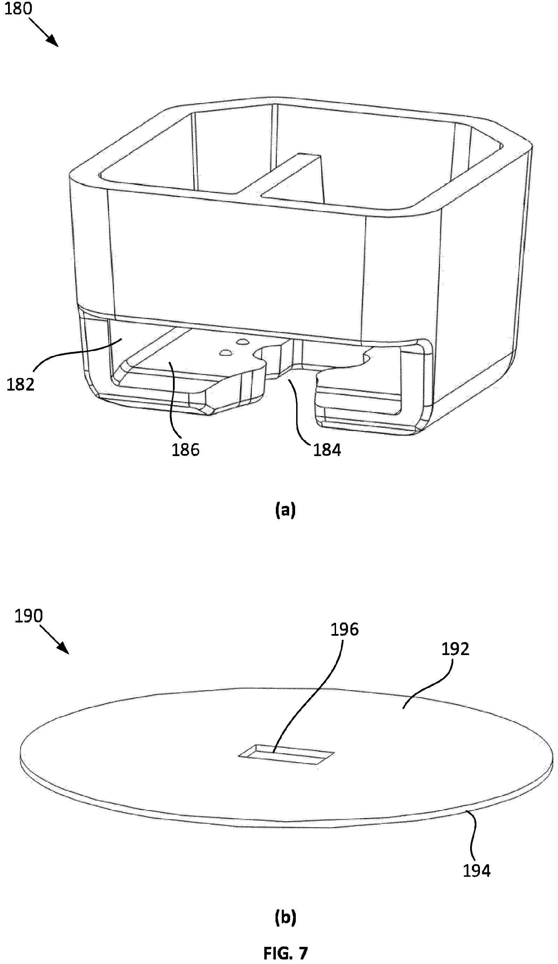

Figure 7 shows examples of (a) a fastener part 180, that can be pre-assembled with the clip 110 and (b) a support structure 190, possible part of the vehicle support structure. The fastener part 180 includes an enclosing wall having an opening 182 on a lateral side, which is adapted to receive the head portion or flange 116 of the clip 110. A recess or slot 184 is provided on the surface 186 inward of the opening 182 so as to receive and retainingly engage the head portion 116 onto surface 186.

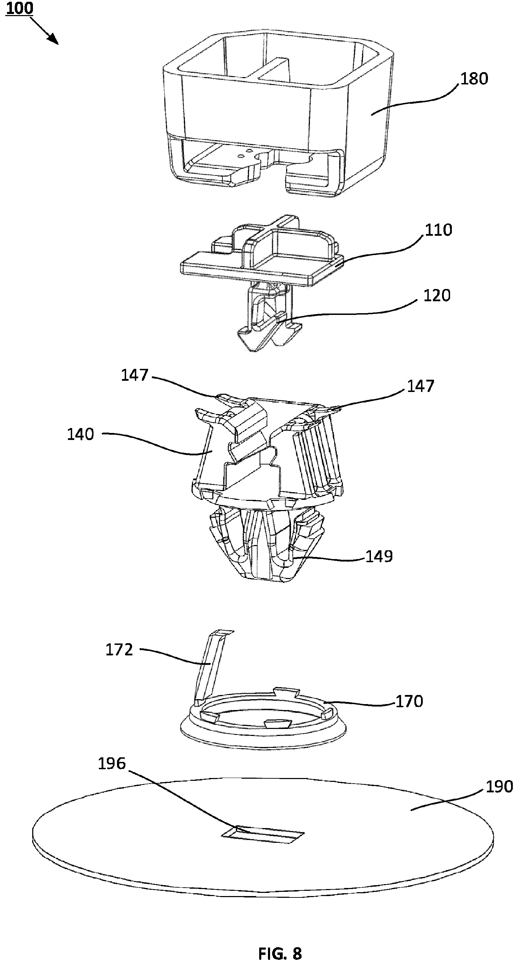

The support structure 190 has an upper surface 192, a lower surface 194 and an opening or aperture 196. The opening 196 is adapted to receive and lockingly engage with the anchor part 149 of the female member 140 such that the upper surface 192 of the support structure 190 rests against the collar 176 of the sealing skirt 170. For completeness Figure 8 illustrates the components of the fastener assembly 100 as well as the fastener part 180 and vehicle structure 190 in an axially aligned exploded view.

Referring now to Figures 9(a)-(f), the assembly and instalment of the fastener assembly 100 is described in detail. Initially, the skirt member 170 is coupled with the female member 140 or clip retainer, the anchor portion 149 of which is then clipped into the aperture 196 of the vehicle structure 190. The male member 110 or clip is then coupled with the fastener part 180, where the head portion 1156 is slid into the opening 182 and fixedly attached within the slot 184. The fastener part 180 and attached clip 110 may be inserted via any one of the two possible directions, i.e. along ***Z***-axis (as shown in Figure 9(d)) or along ***Y***-axis (as shown in Figure 9(f)), however, the clip 110 may only be removed from the clip retainer by sliding out of the recess 144 along the ***Y***-axis direction. In a first mode, the clip 110 is inserted into the clip retainer 140 in the direction along ***Y***-axis). The attachment member 120 is simply inserted through the recess 144 into the bracket 142. More specifically, the two parallel first and second attachment element or hook member 124, 128 are inserted into the bracket 142 such that the first 124a and third hook portion 128a pass through the recess 144a and the second 124b and fourth hook portion 128b pass through the recess 144b. The recesses 144a and 144b hold the hook portions 124a, 124b, 128a, 128b in place.

To remove the clip 110 from the clip retainer 140, the process above is simply reversed, i.e. the first and second attachment elements 124, 128 are removed in a direction along the ***Y***-axis) but away from the wall 143. In this particular example embodiment, a window or aperture 145 may be provided in the wall 143 to allow the attachment member 120 and the inside of the bracket 142 to be visible through the window 145. In some embodiments, the wall 143 may be removed completely.

In a second mode, the clip 110 is simply inserted into the clip retainer 140 in the direction along the ***Z***-axis. The attachment elements 124, 128 are simultaneously inserted into the recess 144 where the hook portions 124b, 128b are flexed inwards to move the hook members 124, 128 into the recess 144. When in the recess 144, the first hook portion 124a of the first leg 122 and the third hook portion 128a of the second leg 126 engage and lock with the recess 144b to prevent the clip 110 from being released. When the legs 122,126 are inserted further into the clip retainer 140, the first hook portion 124a of the first leg 122 and the third hook portion 128a of the second leg 126 engage and lock with the recess 144a to prevent the clip 110 from being released. At the same time, the second hook portion 124b of the first leg 122 and the fourth hook portion 128b of the second leg 126 engage and lock with the recess 144b, retaining the clip 110 in place. The hook portions 124a, 124a, 128a, 128b of each leg 122,126 extend opposite one another to engage with the respective recess 144a,144b, which provides a high resistance and retention force to pull-out. This retention force provided by the hook members 124, 128 prevents the clip 110 from being removed from the clip retainer 140 in a direction along the ***Z***-axis. Thus, in order to remove the clip 110 from the clip retainer 140, the removal method for the first mode is used. That is, the first attachment element 124 is removed in a direction along the ***Y***-axis (see also Figure 9(f)).

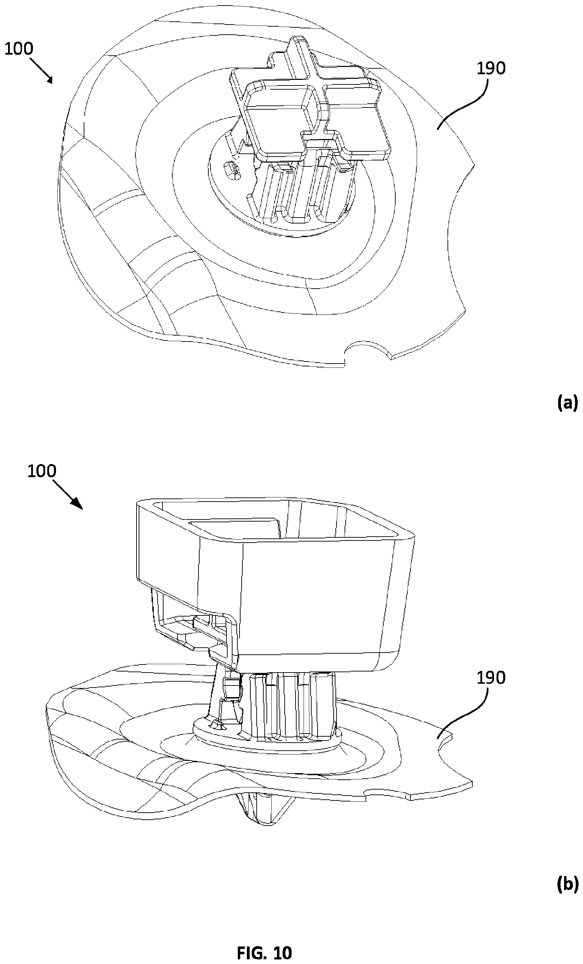

Figure 10 shows the attached fastener assembly 100 (a) without the fastener part 180 and (b) with the attached fastener part 180.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

### List of reference numerals and components

| | | | |
|---|---|---|---|
| 10 | rivet | 143 | wall |
| 11 | legs | 144 | recess or aperture |
| 12 | engagement shoulder | 144a, 144b | stacked recesses |
| 13 | gap | 145 | base |
| 20 | coupling bracket | 147 | wing portion |
| 21 | receiving part | 148 | slot |
| 100 | fastener assembly | 149 | anchor part |
| 110 | clip | 170 | sealing skirt |
| 112 | proximal end | 172 | mounting portion |
| 114 | distal end | 174 | rim |
| 116 | head, flange | 175 | through-hole |
| 120 | attachment member | 176 | collar |
| 122 | first leg | 178 | protrusion |
| 124 | first attachment element | 180 | fastener part |
| 124a | first hook portion | 182 | opening |
| 124b | second hook portion | 184 | recessed portion |
| 126 | second leg | 186 | surface |
| 128 | second attachment element | 190 | support structure |
| 128a | third hook portion | 192 | upper surface |
| 130 | central axis | 194 | lower surface |
| 140 | clip retainer | 196 | rectangular opening |
| 141a,b | shoulder portion | | |
| 142 | bracket | | |

## Claims

1. A fastener assembly for fastening a component to a support structure, comprising:
a male member, comprising a substantially planar head portion at a proximal end having a top and a bottom head surface normal to a first central axis, at least a first and second parallelly arranged and resiliently deformable longitudinal anchor member, each one extending away from said bottom head surface in a direction parallel to and rotationally symmetrical about said first central axis ,said first and said second anchor member terminating in a respective first and second locking portion;
a female member, comprising a substantially planar base portion arranged normal to a second central plane extending along a second central axis, having a first coupling bracket and a second coupling bracket, arranged reflective-symmetrical to said first coupling bracket with respect to said second central plane, said first and said second coupling bracket forming at least one central aperture extending along a longitudinal axis parallel to said second central plane, said at least one central aperture being adapted to retainingly receive and lockingly engage with said first and second locking portion of respective said first and said second anchor member when moved into said central aperture along an insertion direction that is coaxial with said first and second central axis, during use;
wherein at least a portion of each one of said first and said second anchor member is adapted to elastically flex into a direction opposite to a respective other one of said first and second anchor member when engaging with respective said first and said second coupling bracket during insertion into said at least one central aperture along said insertion direction.

2. A fastener assembly according to claim 1, wherein said first central axis defines a first central plane parallel to said second central plane, during assembly, and wherein each one of said first and said second anchor member is arranged axially offset from said first central plane in a direction opposite to one another.

3. A fastener assembly according to claim 2, wherein each one of said first and second locking portion comprise a first locking arm, projecting in a direction normal to and away from said second central plane, and a second locking arm, projecting in a direction towards said second central plane and said proximal end.

4. A fastener assembly according to any one of the preceding claims, wherein said at least one central aperture further comprises a first central aperture and a second central aperture, said second central aperture being axially spaced apart from said first central aperture in a direction along said second central axis.

5. A fastener assembly according to claim 4, wherein each one of said first and second coupling bracket comprises a shoulder portion between said first central aperture and said second central aperture, said shoulder portion projecting towards said second central plane.

6. A fastener assembly according to any one of claims 4 and 5, when dependent on claim 2 or claim 3, wherein said first central aperture is adapted to retainingly receive and lockingly engage with said first locking arm of respective said first and second locking portion.

7. A fastener assembly according to any one of claims 4 to 6, when dependent on claim 2 or claim 3, wherein said second central aperture is adapted to retainingly receive and locking engage with said second locking arm of respective said first and second locking portion.

8. A fastener assembly according to any one of the preceding claims, wherein said female member further comprises a fastening element, extending away from a bottom surface of said planar base portion along said second central axis, adapted to lockingly engage with the support structure.

9. A fastener assembly according to any one of the preceding claims, wherein a top surface of each one of said first and second coupling bracket comprises at least one elastically deformable wing member configured to resiliently bias against said bottom head surface of said head portion, during assembly.

10. A fastener assembly according to claim 9, wherein each one of said at least one wing member of said first and second coupling bracket projects in a direction away from said second central plane.

11. A fastener assembly according to any one of the preceding claims, wherein said female member comprises a substantially planar wall portion, arranged substantially normal to said base portion and said second central plane, configured to stoppingly engage with said first and second anchor member when moved within said central aperture in a direction along said longitudinal axis.
